# EUROPÄISCHE PATENTSCHRIFT

(11) **EP 2 195 266 B1**
(45) Veröffentlichungstag und Bekanntmachung des Hinweises auf die Patenterteilung: **11.05.2016**
(21) Anmeldenummer: 08802008.6
(22) Anmeldetag: 11.09.2008
(51) Int. Cl.: B65G 57/00, B65G 47/51

(54) **VORRICHTUNG ZUM AUTOMATISCHEN ZUFÜHREN VON SORTENREINEN GEBINDEN ZU EINEM SÄULENSTAPLER**
DEVICE FOR AUTOMATICALLY SUPPLYING PACKAGES THAT HAVE BEEN SORTED BY TYPE TO A COLUMN STACKER
DISPOSITIF D'ALIMENTATION AUTOMATIQUE D'UN EMPILEUR À COLONNE EN RÉCIPIENTS DE MÊME TYPE

(30) Priorität: 30.09.2007 DE 102007046424
(43) Veröffentlichungstag der Anmeldung: 16.06.2010
(73) Patentinhaber: Knapp AG, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2008/007447
(87) Internationale Veröffentlichungsnummer: WO 2009/043432

(56) Entgegenhaltungen:
- EP-A- 0 385 455
- DE-A1- 3 630 718
- DE-A1- 19 906 604

## Beschreibung

Die Erfindung betrifft eine Vorrichtung zum automatischen Zuführen von sortenreinen Gebinden zu einem Säulenstapler, vorzugsweise in einem Sortersystem, mit zumindest einer Zuführstrecke, auf der die sortenreinen Gebinde einzeln und in Teilstapeln chaotisch verteilt einem Säulenstapler automatisch zugeführt wird, gemäß Oberbegriff des Patentanspruchs 1.

Eine Vorrichtung der vorgenannten Art ist im Wesentlichen aus US 2006/0249354 A1 bekannt.

Im Zuge einer leistungsstarken vollautomatischen Stapelung von automatisierbaren Gebinden unterschiedlicher Form und Geometrie ist es notwendig, Stapelmaschinen zu konstruieren, die in der Lage sind, unterschiedlichste Gebindetypen zu stapeln. Die Stapelmaschinen sind von der Systematik her sogenannte Säulenstapler. Die Gebindestapelung ist Teil einer logistischen Gesamtlösung zum Sortieren von automatisierbaren Gebinden.

Zur Leistungs- und Effizienzsteigerung werden Gebinde nicht als Einzelkästen, sondern in Stapeln auf Zuführstrecken durch die Anlage bewegt. Die maximale Stapelhöhe ist für jeden einzelnen Gebindetyp limitiert. Auf den Zuführstrecken ist die Gebindeverteilung chaotisch, d.h. es ist nicht bekannt bzw. manipulierbar, in welcher Reihenfolge und in welcher Stapelhöhe die einzelnen Gebindetypen zum Bereich der automatischen Stapelung kommen. Grundsätzlich ist eine Stapelmaschine in der Lage, mehrere Gebindetypen zu stapeln. Im laufenden Betrieb wird einem Säulenstapler jeweils ein einziger Gebindetyp zugeordnet. Gebindetypen sind charakterisierbar durch unterschiedliche Grundflächen, unterschiedliche Gebindehöhen, und z.B. unterschiedliche Musterungen und Farbgebung bei gleicher äußerer Geometrie.

Die Steuerung der Gesamtanlage gewährleistet, dass nur der eine Gebindetyp der Stapelmaschine zugeführt wird. Bei der Stapelmaschine handelt es sich um einen Säulenstapler, der Gebindetypen-abhängig Türme mit einer definierten Höhe bildet.

Zu diesem Zweck greift die Stapelmaschine einen Gebindestapel mit einer bestimmten Höhe und hebt ihn hoch. Ein nachfolgender Gebindestapel beispielsweise mit einer anderen Höhe fährt in die Maschine ein. Die Maschine stellt den hochgehobenen Stapel auf den eingefahrenen Stapel, positioniert sich neu und greift beide Stapel und hebt beide hoch. Nun fährt ein weiterer Stapel beispielsweise wieder mit einer anderen Höhe ein. Der Vorgang wird solange wiederholt, bis ein Turm definierter Höhe entstanden ist. Aus der obigen Beschreibung geht hervor, dass jeweils nur ein einzelner Gebindestapel in die Stapelmaschine einfahren kann, und zwar dann, wenn der Stapel in der Maschine hochgehoben ist.

Eine bekannte Stapelmaschine kann große, aber auch kleine Gebinde stapeln. Von Nachteil ist, dass bei einem Stapeln kleinerer Gebinde die Leistungsfähigkeit der Maschine nicht voll ausgenutzt wird, da die Maschine von ihrer Dimension her für große Gebinde mit großer Grundfläche ausgelegt ist.

Ausgehend vom eingangs genannten Stand der Technik ist es Aufgabe der Erfindung, eine Vorrichtung zum Zuführen von sortenreinen Gebinden der eingangs genannten Art zu schaffen, bei der die maximale Stapelkapazität der Stapelmaschine bzw. des Säulenstaplers auch bei kleineren Gebinden optimal ausgenutzt werden kann.

Gelöst wird die Aufgabe durch eine Vorrichtung mit den Merkmalen nach Anspruch 1, vorteilhaft weitergebildet durch die Merkmale nach den abhängigen Ansprüchen.

Wesen der Erfindung ist eine Steuereinrichtung mit Sensoren an der Zuführstrecke und im Gebinderegister, die so eingerichtet ist, dass ein auf der Zuführstrecke in Richtung Säulenstapler zugeführtes vorderstes Gebinde oder ein zugeführter vorderster Gebinde-Teilstapel erkannt und beim Gebinderegister mit dem entsprechenden Gebinde oder Gebinde-Teilstapel des Gebinderegisters verheiratet wird, und beide dann unmittelbar hintereinander angeordneten Gebinde und/oder Gebinde-Teilstapel auf der Zuführstrecke dem Säulenstapler gleichzeitig zugeführt werden.

Eine derartige Steuereinrichtung ist aus dem Stand der Technik nicht bekannt und auch nicht nahegelegt. Die eingangs genannte US 2006/0249354 A1 und auch nicht die ferner bekannten DE 36 30 718 A1 und DE 199 06 604 A1 liefern keinen Hinweis in Richtung der vorliegenden Erfindung, die insbesondere auch ein besonderes Gebinderegister vorsieht.

Durch die erfindungsgemäße Steuereinrichtung kann die Stapelkapazität beispielsweise bei kleineren Gebinden, deren Grundfläche halb so groß ist wie die eines großen Gebindes, für die der Säulenstapler ausgelegt ist, praktisch verdoppelt werden. Nach der Erfindung können also kleinere Gebinde doppelt so schnell und doppelt so effektiv gestapelt werden, wie dies nach dem Stand der Technik möglich ist. Da die beiden hochgestapelten Stapeltürme unmittelbar hintereinander angeordnet sind, können die beiden Türme, die sich gegenseitig stabilisieren, auch im Anschluss an den Säulenstapler paarweise weiterbehandelt und insbesondere abtransportiert und einem Speicherplatz zugeführt werden. Dies erspart Zeit bei zuverlässigem Betrieb.

Unter Gebinden versteht man stapelbare Behältnisse wie offene und geschlossene Kästen, Kisten, Kartons und dergleichen mehr, mit und ohne Inhalt, im Besonderen tragbare Leerbehälter oder Leergut beispielsweise in einem Supermarkt. Der auf der Zuführstrecke zugeführte vorsortierte sortenreine Gebindetyp kennzeichnet sich durch stapelbare Behältnisse mit einer gleichen Grundfläche, zumeist jedoch durch identische Behältnisse gleicher Höhe.

Es werden die zumindest zwei gleich hohen unmittelbar hintereinander angeordneten Gebinde oder Gebinde-Teilstapel in der Zuführstrecke bei einem an die Zuführstrecke angeschlossenen Gebinderegister automatisch zusammengestellt, wobei die erfindungsgemäße Steuereinrichtung nicht nur die automatische Zusammenstellung übernimmt, sondern insgesamt zusammen mit einem Zentralrechner der Anlage einen vollautomatischen Stapelbetrieb bei einem Säulenstapler einrichtet.

Ein leeres Gebinderegister wird bestückt, indem auf der Zuführstrecke dem leeren Gebinderegister jeweils ein einzelnes Gebinde sowie Gebinde-Teilstapel jeweils unterschiedlicher Stapelhöhe automatisch zugeführt und im Gebinderegister zwischengespeichert werden.

Ein auf der Zuführstrecke in Richtung Säulenstapler zugeführtes vorderstes Gebinde bzw. zugeführter vorderster Gebinde-Teilstapel wird automatisch erkannt und beim Gebinderegister mit dem entsprechenden Gebinde oder Gebinde-Teilstapel des Gebinderegisters verheiratet, und es werden dann beide unmittelbar hintereinander angeordneten Gebinde oder Gebinde-Teilstapel dem Säulenstapler gleichzeitig zugeführt.

Während einer Verheiratung werden gegebenenfalls die dem erkannten Gebinde bzw. Gebinde-Teilstapel nachgeordneten Gebinde und Gebinde-Teilstapel auf der Zuführstrecke angehalten.

Für eine Verheiratung kann das erkannte Gebinde oder der in seiner Höhe erkannte Gebinde-Teilstapel auf der Zuführstrecke beim Gebinderegister unmittelbar vor oder hinter dem entsprechenden seitlich angeordneten im Gebinderegister zwischengespeicherten Gebinde/Teilstapel positioniert werden, und es wird das entsprechende zwischengespeicherte Gebinde oder der entsprechende zwischengespeicherte Gebinde-Teilstapel quer in die Zuführstrecke zum positionierten Gebinde/Teilstapel automatisch transportiert.

Eine Gebinderegister-Leerstelle eines abtransportierten zwischengespeicherten Gebindes/Teilstapels kann durch Zuführen eines entsprechenden Gebindes oder eines entsprechenden Gebinde-Teilstapels von der Zuführstrecke automatisch wieder besetzt werden, sowie ein entsprechendes vorderstes Gebinde oder ein entsprechender vorderster Gebinde-Teilstapel auf der Zuführstrecke erkannt werde.

Obgleich die Gebinde sortenrein auf der Zuführstrecke zugeführt werden, kann vorsorglich vorgesehen sein, dass ein nicht erkanntes nicht sortenreines Gebinde oder ein nicht erkannter nicht sortenreiner Gebinde-Teilstapel aus der Zuführstrecke seitlich ausgeschieden oder einer Nebenstrecke zugeführt wird.

In vorteilhafter Erweiterung der Anlage kann vorgesehen sein, dass auf einer vorzugsweise parallelen weiteren Zuführstrecke ein anderer sortenreiner Gebindetyp nach Art des vorgenannten ersten Gebindetyps zumindest paarweise einem weiteren Säulenstapler der gleichen Konfiguration zugeführt wird.

Ferner kann vorgesehen sein, dass auf einer vorzugsweise parallelen dritten Zuführstrecke ein sortenreiner Gebindetyp der maximalen Stapelkapazität des Säulenstaplers ohne Zwischenschaltung eines Gebinderegisters einem dritten Säulenstapler der gleichen Konfiguration zugeführt wird.

Die Erfindung wird nachfolgend anhand von Ausführungsbeispielen unter Bezugnahme auf die beigefügten Zeichnungen näher beschrieben; es zeigen:
- Figur 1: eine Vorrichtung zum Zuführen von sortenreinen Gebinden in schematischer Seitenansicht nach dem Stand der Technik,
- Figur 2: eine entsprechende erfindungsgemäße Vorrichtung in einer Ansicht entsprechend Figur 1, in einem grundsätzlichen Vergleich,
- Figuren 3, 4, 5, und 6: schematische Seitenansicht, Stirnansicht, Draufsicht und perspektivische Ansicht eines erfindungsgemäßen Gebinderegisters mit Zuführstrecke, in einem Verfahrensschritt I unmittelbar vor Bestückung eines leeren Gebinderegisters mit einem Gebinde bzw. mit Gebinde-Teilstapeln,
- Figuren 7, 8, 9 und 10: den Figuren 3 bis 6 entsprechende schematische Ansichten des Gebinderegisters, in einem Verfahrensschritt II unmittelbar nach Bestückung eines leeren Gebinderegisters mit einem Gebinde bzw. mit Gebinde-Teilstapeln,
- Figuren 11, 12, 13 und 14: den Figuren 3 bis 6 entsprechende schematische Ansichten des Gebinderegisters, in einem Verfahrensschritt III unmittelbar nach Erkennung und Zuführung eines Gebinde-Teilstapels T2 zum Gebinderegister,
- Figuren 15, 16, 17 und 18: den Figuren 3 bis 6 entsprechende schematische Ansichten des Gebinderegisters, in einem Verfahrensschritt IV unmittelbar nach Positionierung des vorgenannten Gebinde-Teilstapels T2 unmittelbar vor dem entsprechenden Gebinde-Teilstapel T2 auf dem Speicherplatz S2 im Gebinderegister,
- Figuren 19, 20, 21 und 22: den Figuren 3 bis 6 entsprechende schematische Ansichten des Gebinderegisters, in einem Verfahrensschritt V unmittelbar nach einer Querverschiebung des Gebinde-Teilstapels T2 des Gebinderegisters auf die Zuführstrecke unmittelbar hinter den positionierten Gebinde-Teilstapel T2 auf der Zuführstrecke zwecks Verheiratung,
- Figuren 23, 24, 25 und 26: den Figuren 3 bis 6 entsprechende schematische Ansichten des Gebinderegisters, in einem Verfahrensschritt VI nach Verheiratung beider Gebinde-Teilstapel T2, T2 mit Abtransport auf der Zuführstrecke zu einem Säulenstapler.

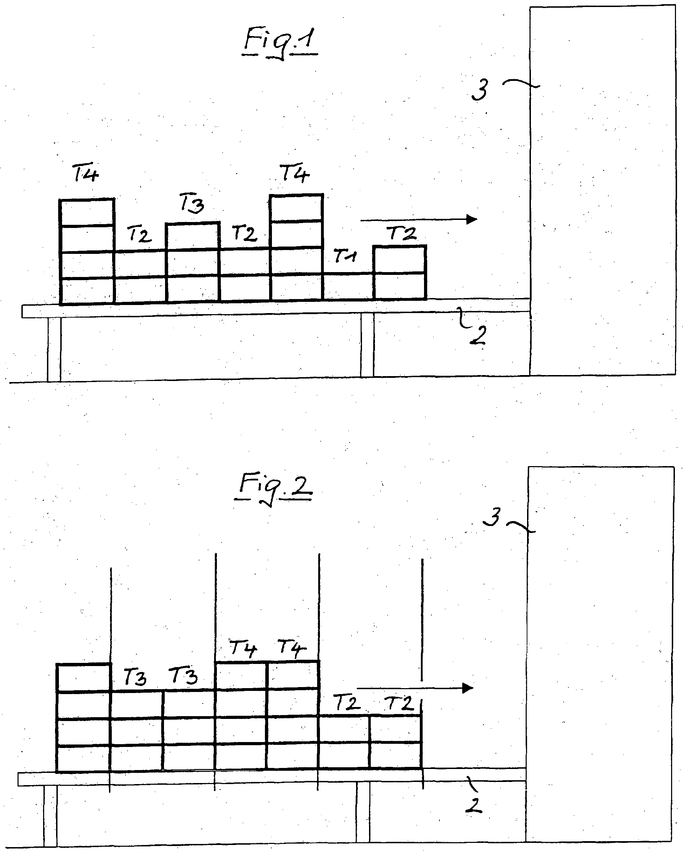

In Figur 1 ist schematisch eine bekannte Vorrichtung zum automatischen Zuführen von sortenreinen Gebinden, vorzugsweise in einem Sortersystem, gezeigt.

Die bekannte Zuführvorrichtung umfasst zumindest eine Zuführstrecke 2, auf der die sortenreinen Gebinde T1 einzeln und in Teilstapeln T2, T3 und T4 chaotisch verteilt einem Säulenstapler 3 automatisch zugeführt und im Säulenstapler vorzugsweise automatisch zu einem Vollstapel hochgestapelt werden, und der Vollstapel anschließend abgeführt wird.

Zur Leistungs- und Effizienzsteigerung werden die Gebinde vornehmlich nicht als Einzelkästen, sondern in Stapeln auf der Zuführstrecke 2 durch die Anlage bewegt. Die maximale Stapelhöhe ist für jeden einzelnen Gebindetyp limitiert. Einem Säulenstapler 3 wird jeweils ein einziger Gebindetyp zugeordnet. Die Steuerung der Gesamtanlage gewährleistet, dass nur der eine Gebindetyp dem Säulenstapler 3 zugeführt wird. Für die Ausbildung bzw. ein Stapeln eines Gebindeturms definierter Gesamthöhe greift der Säulenstapler 3 gemäß Figur 1 den rechten Gebinde-Teilstapel T2 bestehend aus zwei einzelnen Gebinden nach einem Einfahren in den Säulenstapler 3 und hebt ihn hoch. Ein nachfolgender "Gebindestapel" bestehend aus einem einzigen Gebinde T1 fährt in die Maschine ein. Die Maschine stellt den hochgehobenen Gebinde-Teilstapel T2 auf das Gebinde T1, positioniert sich neu und greift beide Stapel T2 sowie T1 und hebt beide hoch. Nun fährt der nachfolgende Gebinde-Teilstapel T4 bestehend aus vier Einzelgebinden ein. Der Vorgang wird solange wiederholt, bis ein Turm definierter Höhe entstanden ist. Aus der obigen Beschreibung geht hervor, dass jeweils nur ein einzelner Gebindestapel in den Säulenstapler einfahren kann, und zwar dann, wenn der in den Säulenstapler 3 eingefahrene Stapel hochgehoben ist.

Der bekannte Säulenstapler ist für ein großes Gebinde mit einer maximalen Grundfläche ausgelegt, ist jedoch in der Lage, auch kleinere Gebinde mit kleinerer z.B. hälftiger Grundfläche hochzustapeln. Aufgrund der Tatsache, dass der bekannte Säulenstapler für beide Geometrien konstruiert ist, geht für Gebinde mit z.B. halber Grundfläche Stapelkapazität innerhalb des Säulenstaplers verloren.

Wesen der vorliegenden Erfindung ist, dass dem Säulenstapler 3 gleichzeitig zumindest zwei gleich hohe unmittelbar hintereinander angeordnete Gebinde-Teilstapel T2, T2 gemäß Figur 2, rechts, dem Säulenstapler 3 zugeführt werden, und anschließend T4, T4, dann T3, T3, etc., die vom Säulenstapler dann gleichzeitig hochgestapelt werden. Dadurch kann die Stapelkapazität des Säulenstaplers bei kleineren Gebinden zumindest dann auf das Doppelte gesteigert werden, wenn die Grundfläche der kleineren Gebinde halb so groß wie die maximale Grundfläche eines großen Gebindes ist, für die der Säulenstapler ausgelegt ist, d.h. die Summe der beiden Grundflächen der kleineren Gebilde gleich der maximalen Grundfläche eines großen Gebindes ist.

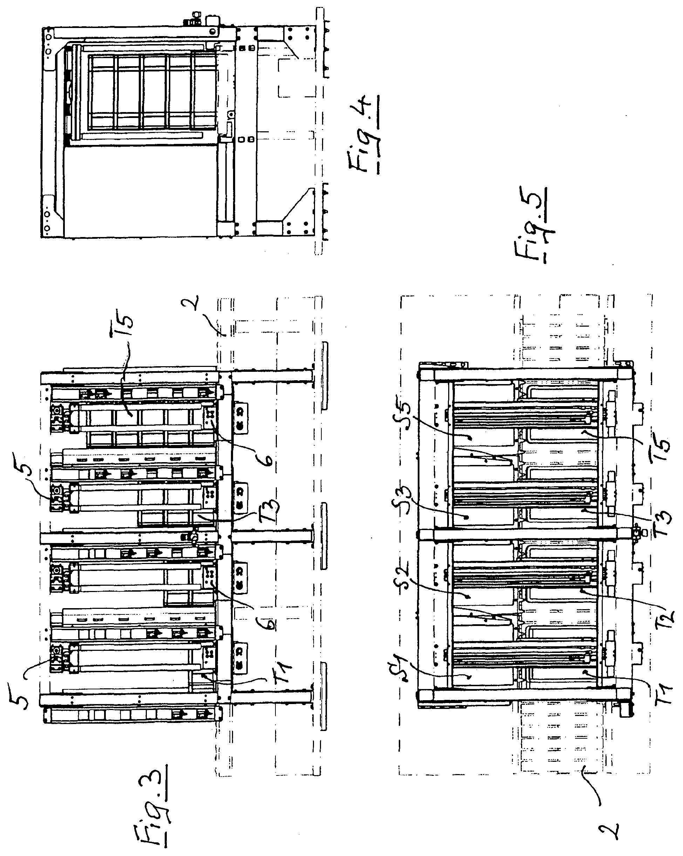

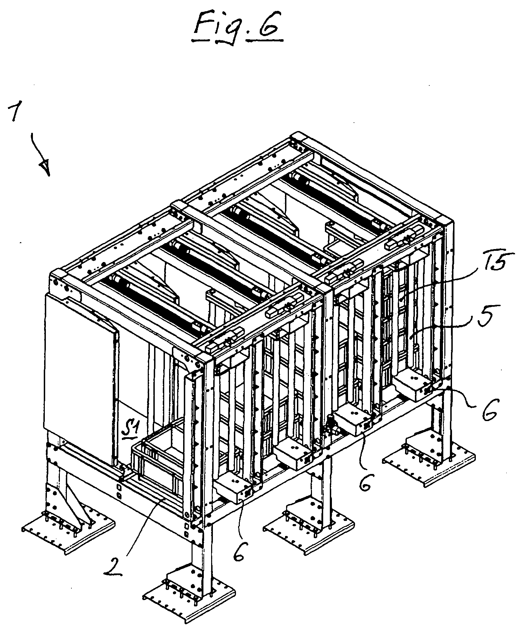

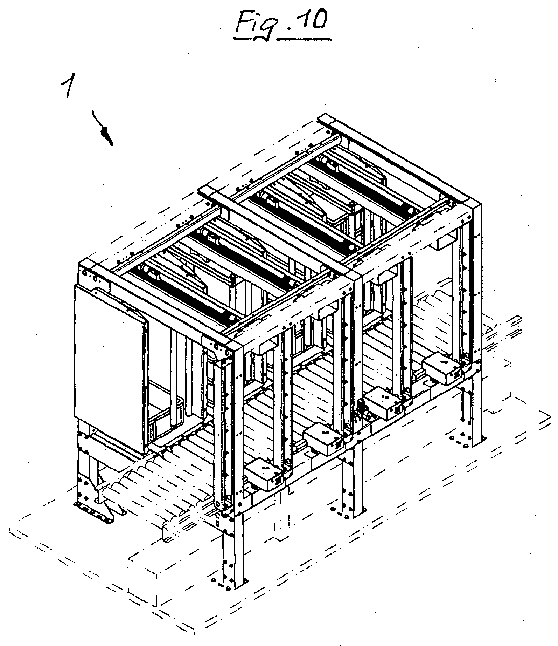

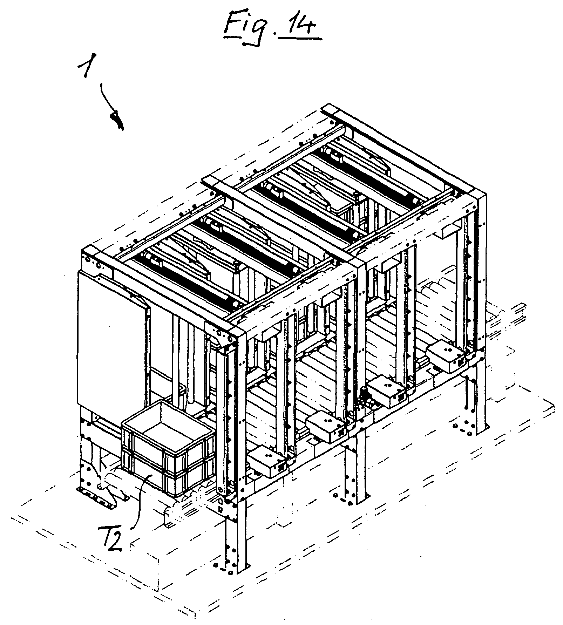

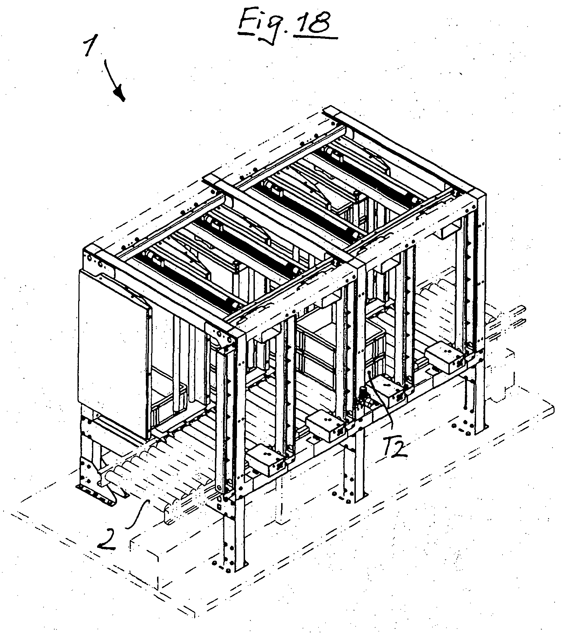

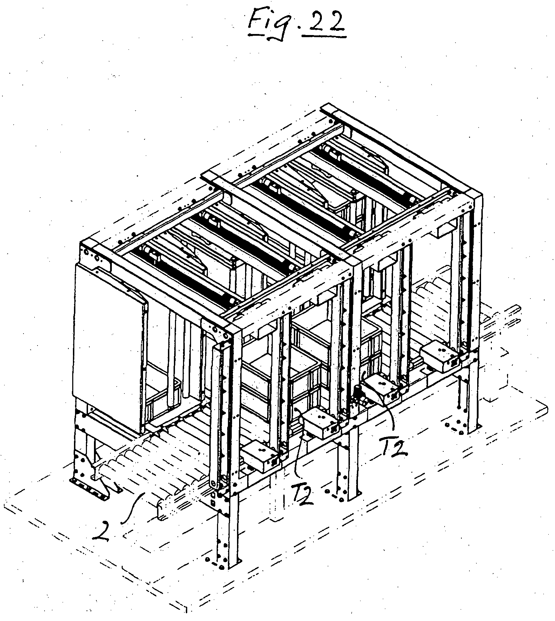

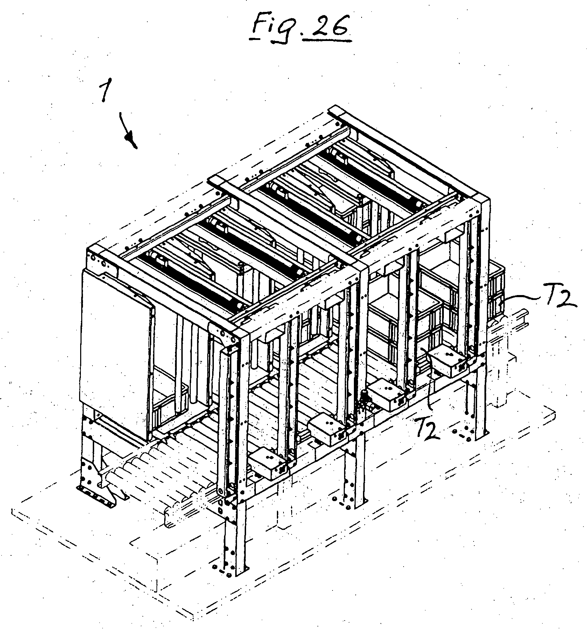

Um dem Säulenstapler 3 gemäß Figur 2 gleichzeitig zumindest zwei gleich hohe unmittelbar hintereinander angeordnete Gebinde T1, T1 oder Gebinde-Teilstapel T2, T2 bzw. T3, T3 bzw. T4, T4 bzw. T5, T5 zuzuführen, ist im Bereich der Zuführstrecke 2 ein Gebinderregister 1 nach den Figuren 3 bis 26 vorgesehen.

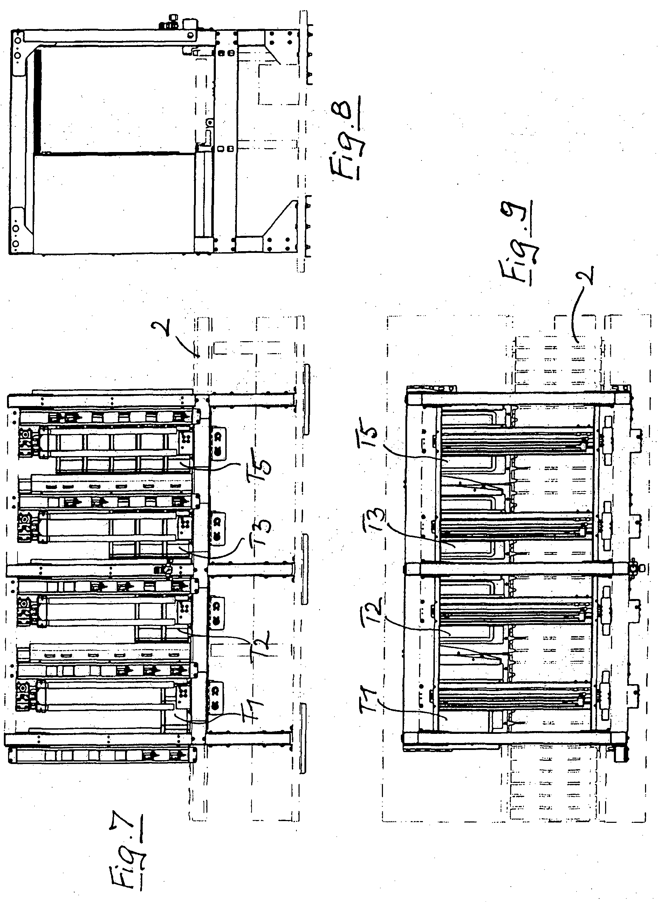

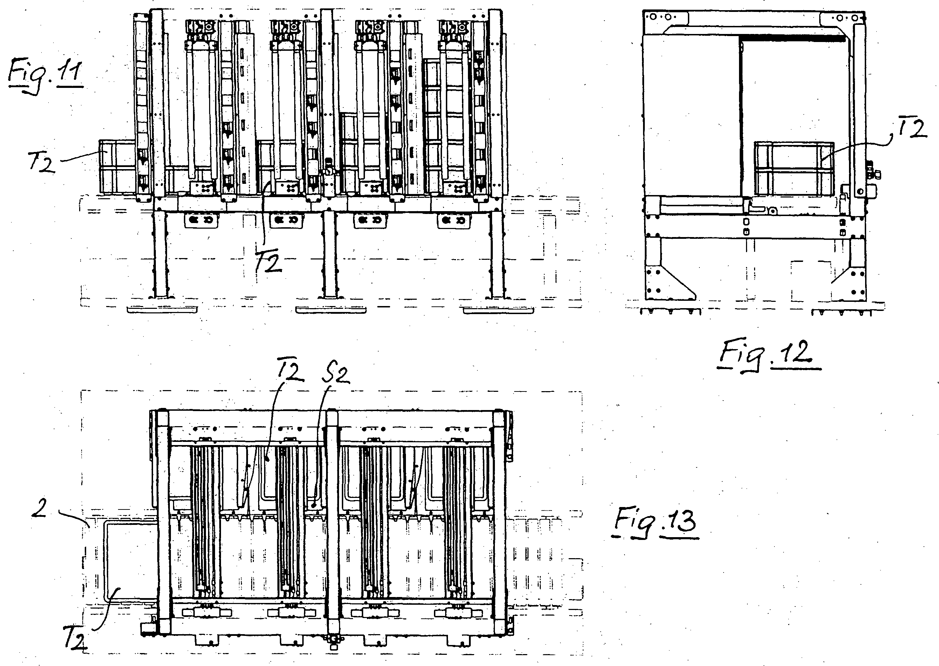

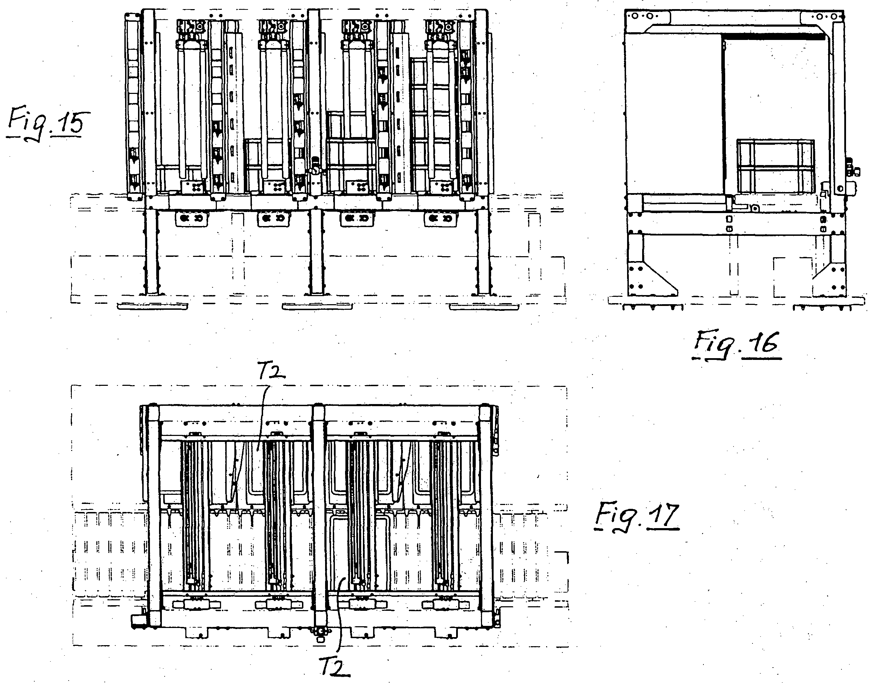

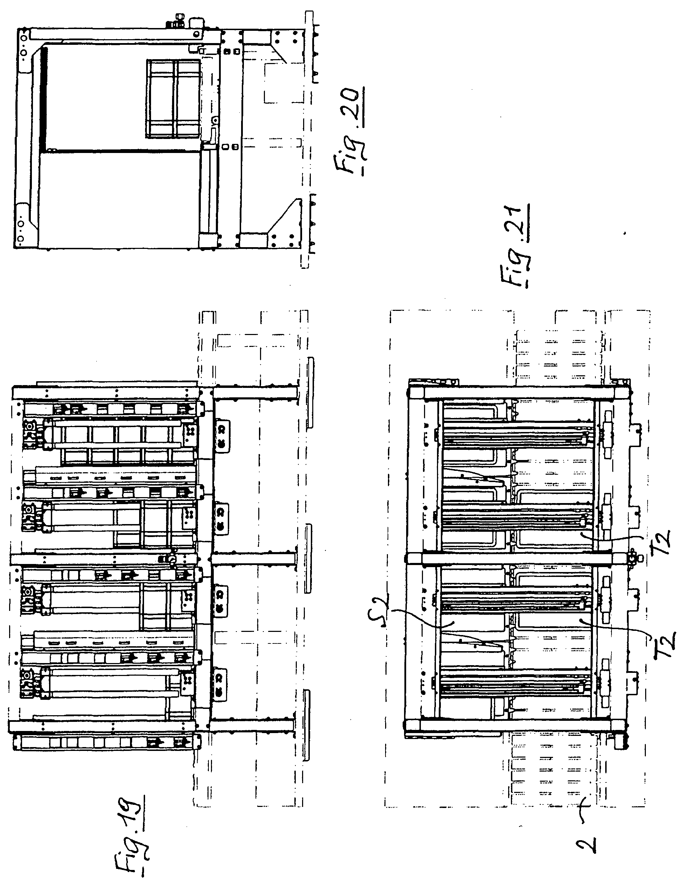

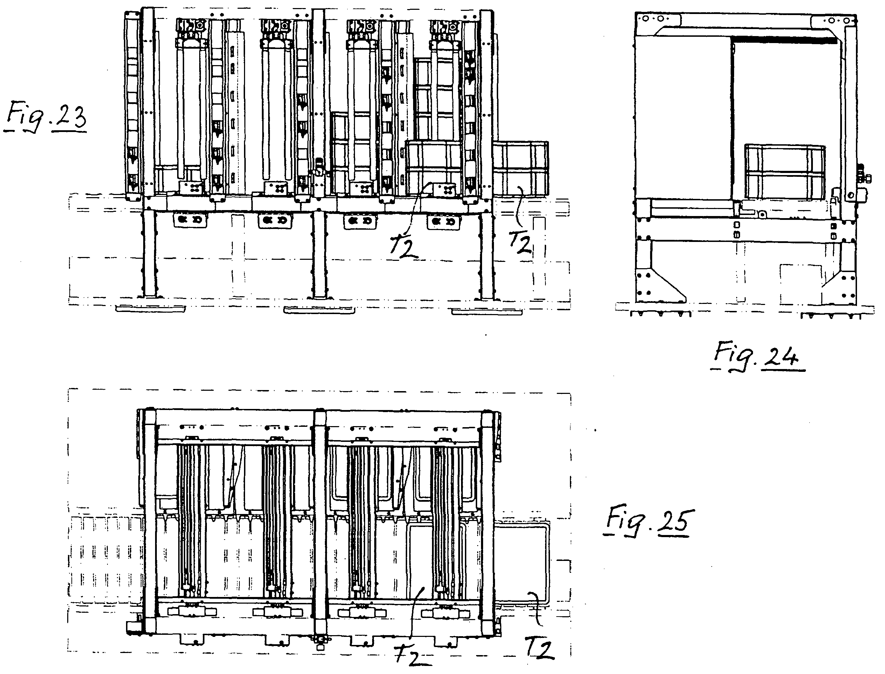

Das Gebinderegister 1 nach den Figuren 3 bis 26 bevorratet im Betrieb jede einzelne mögliche Höhe an Gebinden T1 bzw. jede einzelne mögliche Höhe an Gebinde-Teilstapeln T2, T3, T4, T5 ein einziges Mal, und zwar auf Speicherplätzen S1, S2, S3, S4 und S5, wie dies beispielsweise der Figur 5 in Verbindung mit Figur 9 zu entnehmen ist. Wird dann ein auf der Zuführstrecke 2 zugeführtes Gebinde bzw. ein zugeführter Gebinde-Teilstapel T2 beispielsweise nach Figur 13, links, erkannt, fragt eine Steuereinrichtung das Gebinderegister 1 ab, wo das entsprechende Gebinde bzw. der entsprechende Gebinde-Teilstapel T2 im Gebinderegister zwischengespeichert ist, im Ausführungsbeispiel auf dem Speicherplatz S2 beispielsweise nach Figur 13, oben. Dann fährt das auf der Zuführstrecke 2 erkannte Gebinde bzw. der auf der Zuführstrecke erkannte Gebinde-Teil-stapel T2 an die Stelle des zwischengespeicherten entsprechenden Gebindes bzw. Teilstapels, beispielsweise gemäß Figur 17 der untere Gebinde-Teilstapel T2 unmittelbar vor den gespeicherten Gebinde-Teilstapel T2, oben, um sich mit diesem gemäß Figur 21 auf der Zuführstrecke 2 zu vereinen. Nach Vereinigung gelangen dann beide zusammen zum Säulenstapler 3 beispielsweise nach Figur 25, rechts. Die Leerstelle des freigewordenen Speicherplatzes S2 im Gebinderegister 1 wird wieder besetzt, sowie ein gleiches Gebinde bzw. ein gleicher Gebinde-Teilstapel wieder an der Zuführstrecke 2 erkannt wird.

Bevor die Steuereinrichtung nach Erkennen eines Gebindes bzw. eines Gebinde-Teilstapels sich ein zugeordnetes Gebinde bzw. einen zugeordneten Gebinde-Teilstapel im Gebinderegister 1 sucht, wird zuvorderst das dem erkannten Gebinde/Teilstapel auf der Zuführstrecke 2 nachgeordnete Gebinde/Teilstapel erkannt und abgefragt, ob beide Gebinde/Teilstapel identisch sind. Sind beide identisch, werden beide Gebinde/Teilstapel direkt dem Säulenstapler 3 in Umgehung des Gebinderegisters bzw. Durchschleusung durch das Gebinderegister zugeführt.

Es ist also gemäß den Figuren 3 bis 26 die vorgenannte bekannte Stapelvorrichtung dergestalt weitergebildet, dass an die Zuführstrecke 2 ein Gebinderegister 1, angeschlossen ist, die es ermöglicht, gleichzeitig zumindest zwei gleich hohe unmittelbar benachbarte Gebinde T1, T1 oder Gebinde-Teil-stapel T2, T2 bzw. T3, T3 bzw. T4, T4 bzw. T5, T5 dem Säulenstapler 3 automatisch zuzuführen.

Das Gebinderegister 1 weist parallel zur Zuführstrecke 2 verlaufende Speicherplätze S1, S2, S3, S4, S5 auf, die der Zuführstrecke 2 unmittelbar benachbart und in gleicher Höhe gelegen sind.

Es sind so viele Speicherplätze vorhanden, wie es unterschiedliche Höhen an Gebinden und Gebinde-Teilstapeln gibt, die auf der Zuführstrecke 2 zugeführt werden - im Ausführungsbeispiel fünf, wobei alle Gebinde nicht nur die gleiche Grundfläche, sondern auch die gleiche Höhe aufweisen, insbesondere identisch ausgebildet sind.

Auf den Speicherplätzen S1, S2, S3, S4 bzw. S5 - in den Zeichnungen ist der Speicherplatz S4 weggelassen - können ein einzelnes Gebinde T1 sowie Gebinde-Teilstapel T2, T3, T4 bzw. T5 unterschiedlicher Höhe zwischengespeichert werden, wobei jeder Speicherplatz einen vollautomatischen Querschieber 5 besitzt, um ein einzelnes Gebinde T1 bzw. Gebinde-Teilstapel T2, T3, T4, T5 vom zugeordneten Speicherplatz auf die Zuführstrecke 2 zu transportieren, und umgekehrt. Ist das Gebinderegister, z.B. aus baulichen lokalen Gründen im Einzelfall, nicht unmittelbar neben der Zuführstrecke gelegen, sind die Speicherplatze S1 bis S5 über angetriebene Querförderstrecken mit der Zuführstrecke 2 verbunden.

Gemäß den Figuren 2 bis 26 ist also eine Vorrichtung zum automatischen Zuführen von sortenreinen Gebinden T1 zu einem Säulenstapler 3 in einem Sortersystem vorgesehen, mit zumindest einer Zuführstrecke 2, auf der die sortenreinen Gebinde einzeln und in Teilstapeln chaotisch verteilt dem Säulenstapler 3 automatisch zugeführt werden.

An die Zuführstrecke 2 ist ein Gebinderegister 1 für eine gleichzeitige automatische Zuführung von zumindest zwei gleich hohen unmittelbar hintereinander angeordneten Gebinden T1, T1 oder Gebinde-Teilstapeln T2, T2 bzw. T3, T3 bzw. T4, T4 bzw. T5, T5 zum Säulenstapler 3 angeschlossen.

Das Gebinderegister 1 weist parallel zur Zuführstrecke 2 verlaufende Speicherplätze S1, S2, S3, S4, S5 auf, auf denen ein einzelnes Gebinde T1 und Gebinde-Teilstapel T2, T2 bzw. T3, T3 bzw. T4, T4 bzw. T5, T5 unterschiedlicher Höhe zwischengespeichert werden können, wobei jeder Speicherplatz eine Querförderstrecke zur Zuführstrecke aufweist oder einen Querschieber 5 besitzt, wenn die Speicherplätze der Zuführstrecke unmittelbar benachbart sind.

Die Speicherplätze S1, S2, S3, S4 bzw. S5 des Gebinderegisters 1 sind durch automatisches Zuführen von jeweils einem Gebinde T1 oder von Gebinde-Teilstapeln T2, T3, T4 bzw. T5 unterschiedlicher Höhe, von der Zuführstrecke 2 her, belegbar.

Die Vorrichtung weist eine Steuereinrichtung mit Sensoren 6 an der Zuführstrecke 2 und im Gebinderegister 1, die so eingerichtet ist, dass ein auf der Zuführstrecke 2 in Richtung Säulenstapler 3 zugeführtes vorderstes Gebinde T1 bzw. ein zugeführter vorderster Gebinde-Teilstapel T2, T3, T4 bzw. T5 erkannt und beim Gebinderegister mit dem entsprechenden Gebinde bzw. Gebinde-Teilstapel des Gebinderegisters verheiratet wird, und beide dann unmittelbar hintereinander angeordneten Gebinde T1, T1 bzw. Gebinde-Teilstapel T2, T2 bzw. T3, T3 bzw. T4, T4 bzw. T5, T5 auf der Zuführstrecke 2 dem Säulenstapler 3 gleichzeitig zugeführt werden.

Die Steuereinrichtung ist ferner so eingerichtet ist, dass dem erkannten Gebinde bzw. Gebinde-Teilstapel nachgeordnete Gebinde und Gebinde-Teilstapel auf der Zuführstrecke 2 angehalten werden können.

Insbesondere ist die Steuereinrichtung eingerichtet, dass für eine Verheiratung das erkannte Gebinde T1 bzw. der erkannten Gebinde-Teilstapel T2, T3, T4 bzw. T5 auf der Zuführstrecke 2 beim Gebinderegister 1 unmittelbar vor oder hinter dem entsprechenden seitlich angeordneten im Gebinderegister 1 zwischengespeicherten Gebinde/Teilstapel positioniert wird, und das zwischengespeicherte Gebinde bzw. der zwischengespeicherte Gebinde-Teilstapel quer in die Zuführstrecke 2 zum positionierten Gebinde/Teilstapel transportiert wird.

Die Steuereinrichtung ist auch so eingerichtet, dass eine Gebinderegister-Leerstelle eines abtransportierten zwischengespeicherten Gebindes/Teilstapels T1, T2, T3, T4 oder T5 durch Zuführen eines entsprechenden Gebindes bzw. eines entsprechenden Gebinde-Teilstapels, von der Zuführstrecke her, wieder besetzt wird, sowie ein entsprechendes vorderstes Gebinde T1 bzw. ein entsprechender vorderster Gebinde-Teilstapel T2, T3, T4 bzw. T5 auf der Zuführstrecke 2 erkannt wird.

Schließlich kann die Steuereinrichtung so eingerichtet sein, dass ein nicht erkanntes nicht sortenreines Gebinde bzw. ein nicht erkannter nicht sortenreiner Gebinde-Teilstapel aus der Zuführstrecke 2 seitlich ausgeschieden oder einer Nebenstrecke zugeführt wird.

In Erweiterung kann eine parallele weitere Zuführstrecke mit einem weiteren Gebinderegister für eine zumindest paarweise Zuführung eines anderen sortenreinen Gebindetyps nach Art des vorgenannten ersten Gebindetyps zu einem weiteren Säulenstapler der gleichen Konfiguration vorgesehen sein, sowie gegebenenfalls eine parallele dritte Zuführstrecke ohne Zwischenschaltung eines Gebinderegisters für eine Zuführung eines sortenreinen Gebindetyps der maximalen Stapelkapazität des Säulenstaplers zu einem dritten Säulenstapler der gleichen Konfiguration.

Im Ausführungsbeispiel der Zeichnungen ist ein Gebinderegister 1 mit einer einzigen Reihe an Speicherplätzen S1, S2, S3, S4, S5 in Förderrichtung der Zuführstrecke 2, links, in unmittelbarer seitlicher Nachbarschaft zur Zuführstrecke gezeigt. Das Gebinderegister 1 kann auch eine zweite Reihe an Speicherplätzen S1, S2, S3, S4, S5 auf der anderen Seite der Zuführstrecke 2 besitzen, wobei sich erste und zweite Reihe an Speicherplätzen exakt gegenüberliegen. Beide Reihen an Speicherplätzen werden von den gleichen Querschiebern 5 der Vorrichtung bedient.

Ferner kann vorgesehen-sein, dass sich eine Zuführstrecke 2 mit chaotisch verteilten zugeführten Gebinden/Teilstapeln nach dem Erkennungssystem in zwei parallele Zuführstränge aufteilt, und jedem Zuführstrang ein eigenes Gebinderegister zugeordnet ist. Jedem Gebinderegister kann dann ein eigener Säulenstapler zugeordnet sein. Die beiden Zuführstränge können nach den Gebinderegistern aber auch zusammenführen und einen einzigen Säulenstapler bedienen.

## Patentansprüche

1. Vorrichtung zum automatischen Zuführen von sortenreinen Gebinden (T1) zu einem Säulenstapler (3), vorzugsweise in einem Sortersystem, mit zumindest einer Zuführstrecke (2), auf der die sortenreinen Gebinde einzeln und in Teilstapeln chaotisch verteilt dem Säulenstapler (3) automatisch zugeführt werden, und mit einem an die Zuführstrecke (2) angeschlossenen Gebinderegister (1) für eine gleichzeitige automatische Zuführung von zumindest zwei gleich hohen unmittelbar hintereinander angeordneten Gebinden (T1, T1) oder Gebinde-Teilstapeln (T2, T2 bzw. T3, T3 bzw. T4, T4 bzw. T5, T5) zum Säulenstapler (3), **gekennzeichnet**
**durch** eine Steuereinrichtung mit Sensoren (6) an der Zuführstrecke (2) und im Gebinderegister (1), die so eingerichtet ist, dass ein auf der Zuführstrecke (2) in Richtung Säulenstapler (3) zugeführtes vorderstes Gebinde (T1) oder ein zugeführter vorderster Gebinde-Teilstapel (T2, T3, T4 bzw. T5) erkannt und beim Gebinderegister mit dem entsprechenden Gebinde oder Gebinde-Teilstapel des Gebinderegisters verheiratet wird, und beide dann unmittelbar hintereinander angeordneten Gebinde (T1, T1) und/oder Gebinde-Teilstapel (T2, T2 bzw. T3, T3 bzw. T4, T4 bzw. T5, T5) auf der Zuführstrecke (2) dem Säulenstapler (3) gleichzeitig zugeführt werden.

2. Vorrichtung nach Anspruch 1,
**dadurch gekennzeichnet,**
**dass** das Gebinderegister (1) parallel zur Zuführstrecke (2) verlaufende Speicherplätze (S1, S2, S3, S4, S5) aufweist, auf denen ein einzelnes Gebinde (T1) und Gebinde-Teilstapel (T2, T2 bzw. T3, T3 bzw. T4, T4 bzw. T5, T5) unterschiedlicher Höhe zwischengespeichert werden können, wobei jeder Speicherplatz eine Querförderstrecke zur Zuführstrecke aufweist oder einen Querschieber (5) besitzt, wenn die Speicherplätze der Zuführstrecke unmittelbar benachbart sind.

3. Vorrichtung nach Anspruch 1 oder 2,
**dadurch gekennzeichnet,**
**dass** die Speicherplätze (S1, S2, S3, S4 bzw. S5) des Gebinderegisters (1) durch automatisches Zuführen von jeweils einem Gebinde (T1) oder von Gebinde-Teilstapeln (T2, T3, T4 bzw. T5) unterschiedlicher Höhe, von der Zuführstrecke (2) her, belegbar sind.

4. Vorrichtung nach einem der Ansprüche 1 bis 3,
**dadurch gekennzeichnet,**
**dass** die Steuereinrichtung so eingerichtet ist, dass dem erkannten Gebinde oder Gebinde-Teilstapel nachgeordnete Gebinde und Gebinde-Teilstapel auf der Zuführstrecke (2) angehalten werden.

5. Vorrichtung nach einem der Ansprüche 1 bis 4,
**dadurch gekennzeichnet,**
**dass** die Steuereinrichtung so eingerichtet ist, dass für eine Verheiratung das erkannte Gebinde (T1) oder der erkannte Gebinde-Teilstapel (T2, T3, T4 bzw. T5) auf der Zuführstrecke (2) beim Gebinderegister (1) unmittelbar vor oder hinter dem entsprechenden seitlich angeordneten im Gebinderegister (1) zwischengespeicherten Gebinde/Teilstapel positioniert wird, und das zwischengespeicherte Gebinde oder der zwischengespeicherte Gebinde-Teilstapel quer in die Zuführstrecke (2) zum positionierten Gebinde/Teilstapel transportiert wird.

6. Vorrichtung nach einem der Ansprüche 1 bis 5,
**dadurch gekennzeichnet,**
**dass** die Steuereinrichtung so eingerichtet ist, dass eine Gebinderegister-Leerstelle eines abtransportierten zwischengespeicherten Gebindes/Teilstapels (T1, T2, T3, T4 oder T5) durch Zuführen eines entsprechenden Gebindes oder eines entsprechenden Gebinde-Teilstapels, von der Zuführstrecke her, wieder besetzt wird, sowie ein entsprechendes vorderstes Gebinde (T1) oder ein entsprechender vorderster Gebinde-Teilstapel (T2, T3, T4 bzw. T5) auf der Zuführstrecke (2) erkannt wird.

7. Vorrichtung nach einem der Ansprüche 1 bis 6,
**dadurch gekennzeichnet,**
**dass** die Steuereinrichtung so eingerichtet ist, dass ein nicht erkanntes nicht sortenreines Gebinde oder ein nicht erkannter nicht sortenreiner Gebinde-Teilstapel aus der Zuführstrecke (2) seitlich ausgeschieden oder einer Nebenstrecke zugeführt wird.

8. Vorrichtung nach einem der Ansprüche 1 bis 7,
**gekennzeichnet**
**durch** eine parallele weitere Zuführstrecke mit einem weiteren Gebinderegister für eine zumindest paarweise Zuführung eines anderen sortenreinen Gebindetyps nach Art des vorgenannten ersten Gebindetyps zu einem weiteren Säulenstapler der gleichen Konfiguration.

9. Vorrichtung nach einem der Ansprüche 1 bis 8,
**gekennzeichnet**
**durch** eine parallele dritte Zuführstrecke ohne Zwischenschaltung eines Gebinderegisters für eine Zuführung eines sortenreinen Gebindetyps der maximalen Stapelkapazität des Säulenstaplers zu einem dritten Säulenstapler der gleichen Konfiguration.

## Claims

1. Device for automatically feeding containers (T1) of the same kind to a column stacker (3), preferably in a sorter system, with at least one feed section (2), on which the containers of the same kind are fed automatically to the column stacker (3) one by one and distributed chaotically in partial stacks, and with a container register (1) joining the feed section (2) for the simultaneous automatic feeding of at least two containers (T1, T1) or partial container stacks (T2, T2 or T3, T3 or T4, T4 or T5, T5), which are of equal height and are arranged directly one after another, to the column stacker (3),
**characterized**
**by** a control means with sensors (6) at the feed section (2) and in the container register (1), which is set up such that a frontmost container (T1) fed or a frontmost partial container stack (T2, T3, T4 or T5) fed on the feed section (2) in the direction of the column stacker (3) is recognized and mated at the container register to the corresponding container or partial container stack of the container register, and the two containers (T1, T1) and/or partial container stacks (T2, T2 or T3, T3 or T4, T4 or T5, T5), which are now arranged directly one after another, are fed simultaneously on the feed section (2) to the column stacker (3).

2. Device in accordance with claim 1.
**characterized in that**
the container register (1) has storage spaces (S1, S2, S3, S4, S5) extending in parallel to the feed section (2), on which said storage spaces an individual container (T1) or partial container stack (T2, T2 or T3, T3 or T4, T4 or T5, T5) of different heights can be stored intermediately, wherein each storage space has a cross-conveying section to the feed section or cross pusher (5) if the storage spaces of the feed section are directly adjacent.

3. Device in accordance with claim 1 or 2,
**characterized in that**
the storage spaces (S1, S2, S3, S4 or S5) of the container register (1) can be filled by automatically feeding a container (T1) each or partial container stacks (T2, T3, T4 or T5) of different height from the feed section (2).

4. Device in accordance with one of the claims 1 through 3,
**characterized in that**
the control means is set up such that containers or partial container stacks following the recognized container or partial container stack on the feed section (2) are stopped.

5. Device in accordance with one of the claims 1 through 4,
**characterized in that**
the control means is set up such that for mating, the recognized container (T1) or recognized partial container stack (T2, T3, T4 or T5) is positioned on the feed section (2) at the container register (1) directly in front of or behind the corresponding, laterally arranged container/partial stack being stored intermediately in the container register (1), and the container being stored intermediately or the partial container stack being stored intermediately is transported at right angles into the feed section (2) to the positioned container/partial stack

6. Device in accordance with one of the claims 1 through 5,
**characterized in that**
the control means is set up such that a container register empty space of a removed container/partial stack (T1, T2, T3, T4 or T5) stored intermediately is filled again by feeding a corresponding container or a corresponding partial container stack from the feed section, as well as a corresponding frontmost container (T1) or a corresponding frontmost partial container stack (T2. T3, T4 or T5) is recognized on the feed section (2).

7. Device in accordance with one of the claims 1 through 6,
**characterized in that**
the control means is set up such that an unrecognized container, which is not of the same kind, or an unrecognized partial container stack, which is not of the same kind, is laterally removed from the feed section (2) or is fed to a secondary section.

8. Device in accordance with one of the claims 1 through 7,
**characterized**
**by** a parallel additional feed section with an additional container register for feeding, at least in pairs, another container of the same kind in the manner of the aforementioned first container kind to an additional column stacker of the same configuration.

9. Device in accordance with one of the claims 1 through 8,
**characterized**
**by** a preferably parallel third feed section without insertion of a container register for feeding a container of the same kind corresponding to the maximum stacking capacity of the column stacker to a third column stacker of the same configuration.

## Revendications

1. Dispositif d'alimentation automatique de récipients de même type (T1) amenés à un empileur à colonne (3), de préférence dans un système de tri, avec au moins un tronçon d'amenée (2) sur lequel les récipients de même type sont amenés automatiquement à l'empileur à colonne (3) individuellement et de façon à être répartis de façon chaotique en piles partielles et avec un registre de récipients (1) raccordé au tronçon d'amenée (2) pour une amenée automatique simultanée jusqu'à l'empileur à colonne (3) d'au moins deux récipients (T1, T1) ou piles partielles de récipients (T2, T2 ou T3, T3 ou T4, T4 ou T5, T5) de même hauteur disposés directement l'un derrière l'autre, **caractérisé par** un dispositif de commande équipé de capteurs (6) au niveau du tronçon d'amenée (2) et dans le registre de récipients (1) et conçu de telle sorte qu'un récipient (T1) placé tout devant amené sur le tronçon d'amenée (2), en direction de l'empileur à colonne (3), ou qu'une pile partielle de récipients (T2, T3, T4 ou T5) placée tout devant également amenée est détecté et qu'on effectue l'appariement dans le registre de récipients avec le récipient correspondant ou la pile partielle de récipients correspondante du registre de récipients et que les deux récipients (T1, T1) et/ou piles partielles de récipients (T2, T2 ou T3, T3 ou T4, T4 ou T5, T5) placés directement l'un derrière l'autre sont amenés simultanément à l'empileur à colonne (3) en étant disposés sur le tronçon d'amenée (2).

2. Dispositif selon la revendication 1, **caractérisé en ce que** le registre de récipients (1) comporte des places de stockage (S1, S2, S3, S4, S5) s'étendant parallèlement au tronçon d'amenée (2) sur lesquelles un récipient individuel (T1) et une pile partielle de récipients (T2, T2 ou T3, T3 ou T4, T4 ou T5, T5) de différente hauteur peuvent être stockés de façon temporaire, chaque place de stockage comportant un tronçon de transport transversal conduisant au tronçon d'amenée ou possédant un poussoir transversal (5) lorsque les places de stockage du tronçon d'amenée sont directement à proximité.

3. Dispositif selon la revendication 1 ou 2, **caractérisé en ce que** les places de stockage (SI, S2. S3, S4 ou S5) du registre de récipients (1) peuvent être réservées en partant du tronçon d'amenée (2), par alimentation automatique d'un récipient (T1) ou de piles partielles de récipients (T2, T3, T4 ou T5) de différente hauteur, respectivement.

4. Dispositif selon l'une quelconque des revendications 1 à 3, **caractérisé en ce que** le dispositif de commande est conçu de telle sorte que les récipients et piles partielles de récipients placés en aval du récipient détecté ou de la pile partielle de récipients détectée sont arrêtés sur le tronçon d'amenée (2).

5. Dispositif selon l'une quelconque des revendications 1 à 4, **caractérisé en ce que** le dispositif de commande est conçu de telle sorte que pour un appariement, le récipient (T1) détecté ou la pile partielle de récipients (T2, T3, T4 ou T5) détectée est positionné sur le tronçon d'amenée (2) dans le registre de récipients (1), directement avant ou après le récipient/pile partielle correspondant disposé en côté et stocké temporairement dans le registre de récipients (1) et que le récipient stocké temporairement ou la pile partielle de récipients stockée temporairement est transporté transversalement dans le tronçon d'amenée (2) par rapport au récipient positionné ou à la pile partielle positionnée.

6. Dispositif selon l'une quelconque des revendications 1. à 5, **caractérisé en ce que** le dispositif de commande est conçu de telle sorte qu'une place vide de registre de récipients d'un récipient/d'une pile partielle (T1, T2, T3, T4 ou T5) évacué stocké temporairement est de nouveau occupée par amenée d'un récipient correspondant ou d'une pile partielle de récipients correspondante, en partant du tronçon d'amenée et qu'un récipient (T1) correspondant placé tout devant ou une pile partielle de récipients (T2, T3, T4 ou T5) correspondante placée tout devant est détecté sur le tronçon d'amenée (2).

7. Dispositif selon l'une quelconque des revendications 1 à 6, **caractérisé en ce que** le dispositif de commande est conçu de telle sorte qu'un récipient pas de même type non détecté ou qu'une pile partielle de récipients pas de même type non détectée est écarté en côté hors du tronçon d'amenée (2) ou amené à un tronçon secondaire.

8. Dispositif selon l'une quelconque des revendications 1 à 7, **caractérisé par** un tronçon d'amenée parallèle supplémentaire avec un registre de récipients supplémentaire pour une amenée au moins par paire d'un autre type de récipient de même type, à la façon du premier type de récipient précité, jusqu'à un empileur à colonne supplémentaire de la même configuration.

9. Dispositif selon l'une quelconque des revendications 1 à 8, **caractérisé par** un troisième tronçon d'amenée parallèle sans interconnexion d'un registre de récipients pour une amenée d'un type de récipient de même type, de capacité d'empilement maximale de l'empileur à colonnes, jusqu'à un troisième empileur à colonne de la même configuration.
